# EUROPEAN PATENT SPECIFICATION

(11) **EP 2 961 278 B1**
(45) Date of publication and mention of the grant of the patent: **06.03.2019**
(21) Application number: 14744626.4
(22) Date of filing: 12.03.2014
(51) Int. Cl.: A21B 3/04, F24C 15/32

(54) **COOKING DEVICE COMPRISING A STEAM SENSOR AND PROCESS FOR OPERATING THE SAME**
KOCHVORRICHTUNG UMFASSEND EINEN DAMPFSENSOR UND VERFAHREN ZUR BEDIENUNG EINER SOLCHEN VORRICHTUNG
DISPOSITIF DE CUISSON COMPRENANT UN CAPTEUR DE VAPEUR ET PROCEDE D'UTILISATION D'UN TEL DISPOSITIF

(43) Date of publication of application: 06.01.2016
(73) Proprietor: Convotherm-Elektrogeräte GmbH, D-82436 Eglfing (DE)
(72) Inventor: WURDINGER, Guenter, 82380 Peissenberg (DE)
(74) Representative: dompatent von Kreisler Selting Werner - Partnerschaft von Patent- und Rechtsanwälten mbB
(86) International application number: PCT/IB2014/000317
(87) International publication number: WO 2015/136318

(56) References cited:
- EP-A1- 1 151 705
- WO-A2-03/023285
- WO-A2-2005/015087
- DE-A1- 3 821 205
- DE-A1-102005 047 454

## Description

### BACKGROUND

### 1. Field of the Disclosure

The present disclosure relates to cooking devices and methods for measuring and controlling the maximum steam content of the cooking devices. More particularly, the present disclosure relates to steam sensors for cooking devices that operate as part of a closed system so that heat and steam is not lost excessively to the outside environment. The steam sensor of the present disclosure confers energy savings and efficiency to the operation of the cooking devices.

### 2. Background of the Disclosure

The quantity of steam inside the cooking chamber of a cooking device is an important parameter for achieving good cooking results. Thus, measuring and controlling the quantity of steam inside the cooking chamber of a cooking device can be a critical feature of a cooking device and of the quality of the cooked food product. According to the state-of-the-art, many different types of humidity probes and steam sensors are used in commercial cooking devices, such as a commercial combisteamer. Commercial combisteamers generally use steam, hot air or a combination of heat and steam to heat or cook the food product that has been placed in the cooking device. Thus, in the state-of-the-art various devices have been developed to attempt to measure and control the humidity in the cooking chamber of the cooking device so that the food product is properly cooked. Typically, however, as will be seen by the review of this state-of-the-art devices, below, the devices in use, to measure and control the steam or humidity, respectively, in the cooking chamber of the cooking device are located such that servicing and cleaning of the devices is difficult and/or the devices are used in "open" systems that allow for escape of the heated, humid air from the cooking chamber to the outside environment, leading to wasted resources and excessive cost. Some embodiments of the state-of-the-art will be discussed below.

EP 1847203 describes a cooking device that has a steam outlet sensor. The steam outlet sensor includes a first opening that leads to the interior of a protective housing located in a pressure chamber that is exposed to the outside environment. Located in the interior of the protective housing is a temperature sensor that measures a temperature T_{X}. If, for example, the temperature T_{X} read by the temperature sensor falls below a lower threshold temperature T_{S}1, a steam generator is turned on to provide steam to the cooking chamber. On the other hand, if the temperature T_{X} read by the temperature sensor reaches an upper threshold T_{S}2, steam is withdrawn from the cooking chamber. However, the first opening that leads to the protective housing in which the temperature sensor is located is always open and exposed to the outside environment. Therefore, the uncontrolled release of heated, humid air from the cooking chamber cannot be avoided.

EP 0092851 describes a cooking device that has a small cross-sectional measuring line that connects the cooking chamber to an exhaust line leading to the outside environment. There is a temperature sensor located in the small cross-sectional measuring line proximal to the exhaust line leading to the outside environment. The temperature sensor monitors the temperature of the gases departing the cooking chamber and when a sufficient temperature is detected, the heating element tor the steam generator is turned off. In any event, the small cross-sectional measuring line and the temperature sensor therein connect the cooking Chamber to the outside ambient environment at all times. Moreover, the temperature sensor, located in the small cross-sectional measuring line is difficult to service and clean.

EP 2474787 is similar to EP 1847203. In EP 2474787, a temperature sensor is located between an opening in the cooking chamber (that is always open) of the cooking device and an opening that provides egress of cooking chamber gasses to the outside ambient atmosphere. As an overpressure occurs in the cooking chamber due to the production of steam, excess steam, due to the overpressure, escapes through the opening in the cooking chamber, the temperature sensor detects the temperature of the escaping steam that is vented to the outside atmosphere, and adjusts the steam production. Thus, EP 2474787 likewise, controls steam production in an open system that vents steam due to overpressure to the outside ambient environment.

U.S. Patent Application Publication Number 2012/0294992 discloses a humidity sensing arrangement for actively evaluating the humidity within the cooking chamber of the cooking device. In the embodiments shown, the humidity sensing arrangement is in direct communication through an open passage with the cooking chamber and in another embodiment, the humidity sensing arrangement is, further, located along an exhaust path leading to the outside ambient environment.

U.S. Patent No. 6,987,246 discloses a humidity control system for a combination oven, using a temperature sensor disposed outside of, and not in direct communication with, the cooking chamber of the combination oven. However, the temperature sensor is located in the pathway of a bypass tube that is vented outside of the cooking chamber to the ambient atmosphere. Also, in the embodiment of this patent, when there is an overpressure in the cooking chamber due to excess steam, an outlet valve opens and vents hot, humid air to the outside ambient environment.

Document WO 2005/015087 A2 represents a further state of the art relevant for the invention.

As can be seen from the above state-of-the-art, the humidity/steam control devices/systems are employed in systems that continuously vent humid air to the outside environment. These systems waste energy and cause unnecessary heat losses. Also, many of the state-of-the-art systems place the temperature sensor or a humidity sensor in a position that prevents easy cleaning and/or maintenance/replacement of the temperature sensor or humidity sensor.

### SUMMARY

It is an object of the present disclosure to improve the known cooking devices by providing a method/device for controlling steam production without continuous heat losses to the ambient environment.

It is also an object of the present disclosure to improve the known cooking devices by providing a method/device for controlling steam production while minimizing energy consumption.

It is a further object of the present disclosure to improve the known cooking devices by providing a device for controlling seam production in a cooking chamber that has low manufacturing costs associated with its inclusion in the cooking device.

It is a still further object of the present disclosure to improve the known cooking devices by providing a device for controlling steam production in a cooking chamber that is easy to clean and, preferably, can be cleaned at the same time as the cleaning cycle of the cooking chamber itself.

Thus, the benefits provided by the present disclosure include lower manufacturing costs for the steam production controlling device included in the cooking device, better and easier cleaning of the steam production controlling device, and increased reliability and reduced space requirements of providing the steam production controlling device in the cooking device.
These objects and benefits are achieved by a cooking device with the features of claim 1 and a process for controlling the humidity and steam during a cycle of a cooking device as defined by claim 6.

One embodiment according to the present disclosure provides a cooking device having a cooking chamber, a drain pipe having two ends, one end disposed in communication with the cooking chamber and the other end disposed in communication with a condenser located outside of the cooking chamber, the condenser having a water level therein, the water level forming a water barrier, a waste water pipe, a vent pipe leading from the condenser to the outside environment and a temperature sensor for detecting a temperature in communication with the steam generator via a controller, the cooking device characterized in that
the end of the drain pipe disposed in communication with the condenser is below the water barrier so as to form a closed system such that heated and/or humid air in the cooking chamber cannot exit the cooking chamber without passing through the water barrier, and
the temperature sensor is disposed in the condenser in an air space above the water level and proximal the drain pipe.

The cooking device is characterized in that when the temperature sensor detects a pre-determined lower temperature in the air space, the temperature sensor, via the controller, activates the steam generator to produce and provide steam to the cooking chamber (if required), and when the temperature sensor detects a predetermined upper temperature in the air space, the temperature sensor deactivates the steam generator via the controller to cease producing and providing steam to the cooking chamber.

Also preferably, the temperature sensor is disposed in the air space above the water level from about 10 mm to about 80 mm from the drain pipe. Also preferably, the temperature sensor may be shielded so that it does not come into contact with the water level. In addition, in a preferred embodiment, the predetermined upper temperature is from about 0.5K to about 20K greater than the predetermined lower temperature, more preferably, the predetermined upper temperature is from about 1K to about 5K greater than the predetermined lower temperature,

Another embodiment according to the present disclosure provides a process for operating a cooking device having a cooking chamber, a steam generator in direct communication with the cooking chamber, a drain pipe having two ends, one end disposed in communication with the cooking chamber and the other end disposed in communication with a condenser located outside of the cooking chamber, the condenser having a water level therein, the water level forming a water barrier, a waste water pipe, a vent pipe leading from the condenser to the outside environment, and a temperature sensor for detecting a temperature in communication with the steam generator via a controller, the process characterized by
providing that the end of the drain pipe disposed in communication with the condenser is below the water barrier so as to form a closed system such that heated and humid air in the cooking chamber cannot exit the cooking chamber without passing through the water barrier,
providing that the temperature sensor is disposed in the condenser in an air space above the water level and proximal the drain pipe,
starting a cooking cycle in a steam mode for cooking a food product in the cooking chamber,
starting the steam generator to provide steam to the cooking chamber,
allowing excess steam to exit the cooking chamber via the drain pipe and through the water barrier when the cooking chamber is filled with steam,
measuring the temperature of the air space by the temperature sensor,
stopping the steam generator when the temperature sensor detects a predetermined upper temperature in the air space, and
starting the steam generator when the temperature sensor detects a predetermined lower temperature in the air space.

In a preferred embodiment, the stopping of the steam generator when the temperature sensor detects a predetermined upper temperature in the air space and the starting the steam generator when the temperature sensor detects a predetermined lower temperature in the air space occurs at a predetermined upper temperature of from about 0.5K to about 20K greater than the predetermined lower temperature and, more preferably, at a predetermined upper temperature of from about 1K to about 5K greater than the predetermined lower temperature. Also preferably, method is further characterized in that the temperature sensor is shielded so that it does not come into contact with the water level.

### BRIEF DESCRIPTION OF THE DRAWINGS

Further details, features and advantages of the present disclosure will result from the following description of embodiments using the drawings in which:
FIG. 1 shows a schematic representation of a state-of-the-art combisteamer with a temperature sensor for steam control located in a by-pass channel;
FIG. 2 shows a schematic representation of an embodiment of a combisteamer with a temperature sensor for steam control of the present disclosure;
FIG. 3 shows a schematic representation of a process flow chart of the process steps of a temperature sensor for steam control according to the present disclosure;
FIG. 4 shows a schematic representation of an alternative process flow chart of the process steps of a temperature sensor for steam control according to the present disclosure.

### DETAILED DESCRIPTION OF THE PREFERRED EMBODIMENTS

The present disclosure will now be described in detail with respect to the embodiments shown in the Figures, in which like numerals represent like elements.

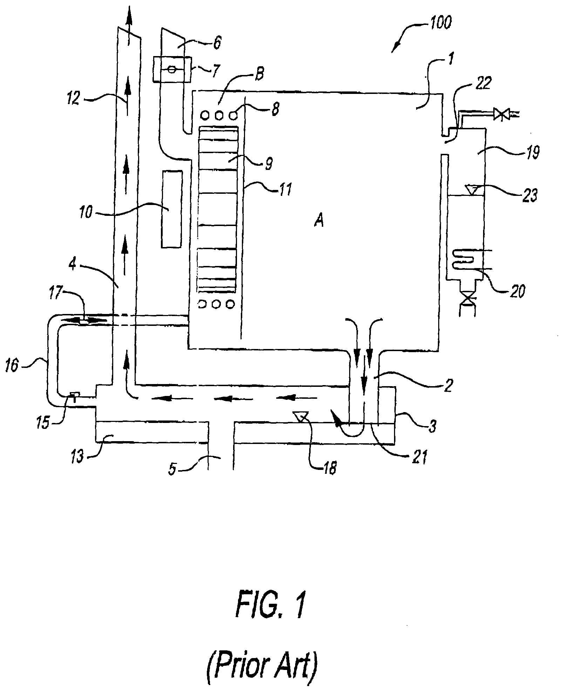

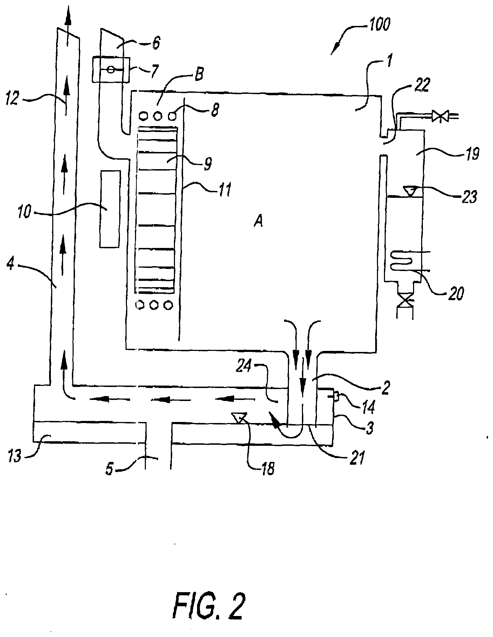

FIG. 1 shows a generalized design of a state-of-the-art combisteamer 100 having a steam sensor and control (not shown). In FIG. 1, combisteamer 100 has a cooking chamber 1, a drain pipe, 2, a condenser 3, a vent pipe. 4, a waste pipe 5, and air inlet pipe. 6 and an air inlet flap 7. Cooking chamber 1 contains heating elements 8, a fan 9 driven by a motor 10, and a panel 11 that separates cooking chamber 1 into a cooking zone A and a heating zone B made up of fan 9 and heating elements 8. Condenser 3 has a water level 18 therein and the water level 18 provides a water barrier 21 between the cooking chamber 1/drain pipe 2 and vent pipe 4. The depth of water level 18 is controlled by the height that waste pipe 5 protrudes into condenser. Air inlet pipe 6 allows for cooler air from the outside environment to enter cooking chamber 1 for dehumidification purposes when air inlet flap 7 is open. Combisteamer 100 is also provided with a steam generator 19 that includes a heating element 20 disposed in a water level 23 such that when steam is demanded for a cooking cycle, heating element 20 heats the water to produce steam that enters into cooking chamber 1 via opening 22. Although steam generator 19 is shown as a separate unit in FIGS. 1 and 2, the steam generator could be replaced with a water line that sprays water directly into heating zone B, as is known in the art. Heated, humid air from cooking chamber 1 generally flows down drain pipe 2 and into condenser 3, following the arrows depicted in FIG. 1 when there is sufficient pressure in the cooking chamber. Thereafter, heated, humid air exits via vent pipe 4, also following arrows 12. The steam sensor of combisteamer 100 is comprised of temperature sensor 15 and bypass pipe 16. Bypass pipe 16 is so-called because, as will now be described, it allows excess steam in cooking chamber 1 to bypass water level 18 in condenser 3. When the pressure in cooking chamber 1 is below a certain threshold level (or in an "under pressure" state), bypass pipe 16 allows airflow in the direction from left to right as shown by double-headed arrow 17, i.e. into cooking chamber 1. During a cooking cycle in which steam is provided by steam generator 19, the pressure in cooking chamber 1 gradually increases. However, as the pressure in cooking chamber 1 increases, the high pressure, high humidity air in cooking chamber 1 proceeds along double-headed arrow 17 from right to left (this being the "path of least resistance" as compared to air flow down drain pipe, 2 and across and through water barrier 21). As hot, humid air from cooking chamber 1 proceeds in a direction double-headed arrow 17 from right to left it, passes through bypass pipe 16, and escapes through a vent pipe 4. In this manner, hot, humid air is wasted, as well as energy consumption is increased. In addition, the location and size of bypass pipe 16 makes it difficult to access and clean.

FIG. 2 shows an embodiment of a combisteamer 100 having a steam sensor and control according to the present disclosure. In FIG. 2, bypass pipe 16 and temperature sensor 15 of FIG. 1 have been removed, thus also removing the bi-directional airflow of double-headed arrow 17. According to the present disclosure, temperature sensor 14 has been placed in the airspace 24 above water level 18 and water barrier 21. As can also be seen, temperature sensor 14 has been placed proximal to drain pipe 2. The impact of these modifications on the function of the temperature sensor and control will become apparent to those of skill in the art based upon the following description. As a cooking cycle requiring steam is commenced and steam generator 19 provides steam to cooking chamber 1, the pressure in cooking chamber 1 gradually increases. At first, steam from steam generator 19 condenses on the cooler surfaces of the food product being cooked in cooking chamber 1. At some point during the cooking cycle, the steam provided to cooking chamber 1 by steam generator 19 condenses more slowly than the new steam is produced. At this point, the pressure in cooking chamber 1 builds to a point where excess steam is forced down drain pipe 2. At the same time, temperature sensor 14 detects an increase in the temperature in airspace 24 due to the pressurized steam exiting cooking chamber 1. When temperature sensor 14 detects a temperature at a pre-determined upper level, temperature sensor 14 sends a signal to steam generator 19 via the controller to shut off and stop producing and providing steam to cooking chamber 1. As steam generator 19 stops producing and providing steam to cooking chamber 1, at a subsequent time, the gases escaping from cooking chamber 1 through drain pipe 2 stop. This causes the temperature in the drain pipe to be at a lower temperature and temperature sensor 14 detects that temperature as well. When temperature sensor 14 detects a predetermined lower temperature, temperature sensor 14 now signals steam generator 19 via the controller to again begin producing and providing steam to cooking chamber 1.

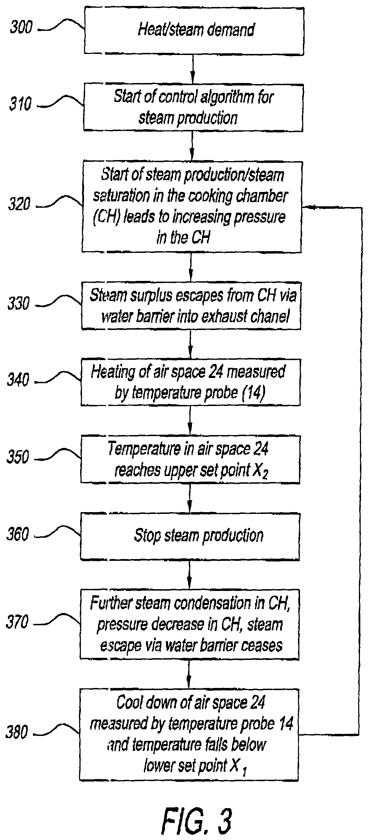

FIG. 3 shows a step-wise process according to the present disclosure. In step 300 a demand for heat and/or steam is made, such as by entry of a cooking cycle for a food product that has been placed in cooking chamber 1 of cooking device 100. In step 310, a control algorithm that reflects, in part, steam production for the cooking cycle entered in step 300 is started. In step 320, steam production by steam generator 19 is commenced and steam is provided to cooking chamber 1. As noted above, with respect to FIG. 2, the steam produced and provided to cooking chamber 1 initially condenses on the surface of the food product in cooking chamber 1. As more steam is produced and provided to cooking chamber 1, the pressure increases in cooking chamber 1. As reflected in step 330, due to increasing pressure (as noted in step 320) surplus steam escapes from cooking chamber 1 via the drain pipe 2 and through water barrier 21 and out vent pipe 4. In step 340, as the pressure increases in cooking chamber 1, the steam surplus escaping from the cooking chamber down drain pipe 2, through water barrier 21 and into vent pipe 4 increases the temperature of air space 24. In step 340, the increasing temperature is measured by temperature sensor 14. In step 350 at some point in the process, temperature sensor 14 reads that the temperature reaches a predetermined upper level (here identified as "set point X₂"). At this point, in step 360, temperature sensor 14 signals steam generator 19 via the controller to stop steam production. Thereafter, as shown in step 370, steam continues to condense in cooking chamber 1, pressure decreases in cooking chamber 1, and the escape of steam through water barrier 21 ceases. The result is that, as reflected in step 380, drain pipe 2 cools down and, at some point, the temperature falls below the lower predetermined lower level, here "set point X₁". At this point, temperature sensor 14 signals steam generator 19 to again begin producing and providing steam to cooking chamber 1 as in step 320. The cycling between steps 320 to 380 continues until the cooking cycle in steam mode for the food product in cooking chamber 1 is complete.

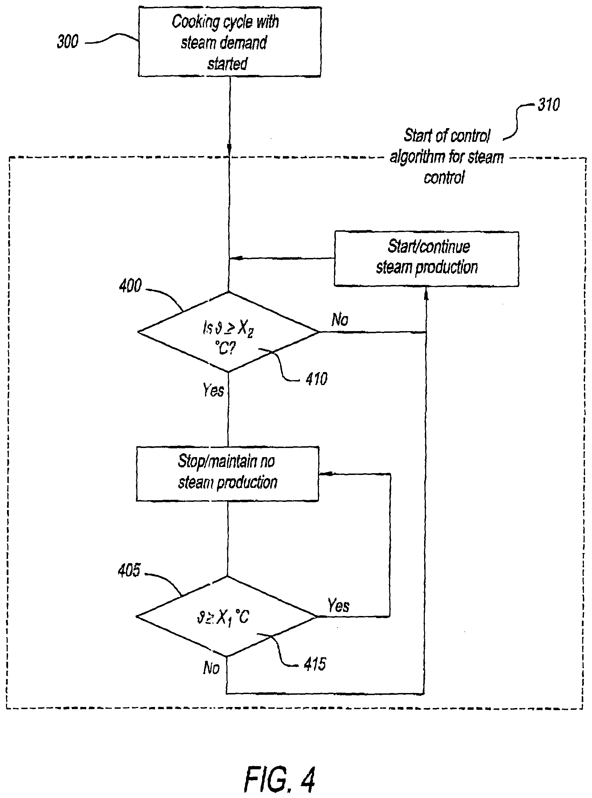

FIG. 4 shows an alternative way of looking at the process shown in FIG. 3. FIG. 4 shows the process in more of a continuous, looped cycle, decision-tree type mode. In FIG. 4, steps 300 and 310 for the demand for heat and/or steam, such as by entry of a cooking cycle requiring steam for a food product that has been placed in cooking chamber 1 of cooking device 100, and entry of a control algorithm that reflects, in part, steam production for the cooking cycle entered in step 300, remain the same, respectively, as in FIG. 3. In FIG. 4, step 310 is shown as dashed line indicating that the control algorithm for steam production is stored in a controller (not shown). In FIG. 4, at temperature sensor 14, that is always reading the temperature of the air space 24 in condenser 3, a decision point 400 is applied. At decision point 400, a question is asked and, depending upon the temperature read by temperature sensor 14, two actions are possible. The question 410 is: Is the temperature read by temperature sensor 14 greater than or equal to the predetermined upper level X₂? If the answer to question 410 is "No", the system loops back to a point prior to decision point 400, and steam production is started or continued by temperature sensor 14 via the controller. If the answer to question 410 is "Yes", steam generator 19 is turned off and steam production is coased. At decision point 405, a question 415 is asked and, depending upon the temperature read by temperature sensor 14, two actions are possible. The question 415 is: Is the temperature read by temperature sensor 14 greater than or equal to the predetermined lower level X₁? If the answer to question 415 is "No", steam production is started or continued. If the answer to question 415 is "Yes", steam generator 19 remains turned off and there is no steam production. In this manner, similar to the process as shown in FIG. 3, the process continues to loop through decision points 400 and 405 until the cooking cycle requiring steam for the food product in cooking chamber 1 is complete or interrupted.

## Claims

1. A cooking device (100) comprising:
a cooking chamber (1);
a condenser (3) located outside of the cooking chamber (1) having a water level (18) therein;
a drain pipe (2) having one end disposed in communication with the cooking chamber (1) and a second end disposed in communication with the condenser (3); and
a humidity and steam control system for controlling the humidity and steam content in the cooking chamber (1), wherein the humidity and steam control system comprises:
a controller,
a steam generator (19) in communication with the cooking chamber (1) and the controller; and
a temperature sensor (14) in communication with the controller;
**characterized in that**
the temperature sensor (14) is disposed in an air space (24) above the water level (18) in the condenser (3) and proximal the drain pipe (2) for measuring the temperature in said air space (24),
wherein the end of the drain pipe (2) disposed in communication with the condenser (3) is below the water level (18) to form a water barrier (21) so that heated and/or humid air in the cooking chamber (1) only exits the cooking chamber (1) by passing through the water barrier (21) during a cooking cycle,
wherein the temperature sensor (14) detects predetermined upper and lower temperatures in the air space (24), wherein during a cooking cycle requiring steam, the upper temperature in the air space (24) indicates a higher pressure in the cooking chamber (1) and wherein the lower temperature in the air space (24) indicates a lower pressure in the cooking chamber (1),
wherein, when the temperature sensor detects the pre-determined lower temperature in the air space (24), the temperature sensor (14) activates the steam generator (19) via the controller to produce and provide steam to the cooking chamber (1),
wherein, when the temperature sensor (14) detects the predetermined upper temperature in the air space (24), the temperature sensor (14) deactivates the steam generator (19) via the controller to cease producing and providing steam to the cooking chamber (1), and
wherein heated and/or humid air in the cooking chamber (1) only exits the cooking chamber (1) by passing through the water barrier (21) until the cooking cycle is complete.

2. A cooking device (100) according to claim 1, wherein the humidity and steam control system is further **characterized in that** the temperature sensor (14) is disposed in the air space (24) above the water level (18) from about 10 mm to about 80 mm from the drain pipe.

3. A cooking device (100) according to claims 1 and 2, wherein the humidity and steam control system is further **characterized in that**
the temperature sensor (14) is shielded so that it does not come into contact with the water level (18).

4. A cooking device (100) according to any of claims 1 to 3, wherein the humidity and steam control system is further **characterized in that**
the predetermined upper temperature is from about 0.5K to about 20K greater than the predetermined lower temperature.

5. A cooking device (100) according to any of claims 1-4, wherein the humidity and steam control system is further **characterized in that**
the predetermined upper temperature is from about 1K to about 5K greater than the predetermined lower temperature.

6. A process for controlling the humidity and steam during a cooking cycle of a cooking device (100) having a cooking chamber (1), a controller, a steam generator (19) in communication with the cooking chamber (1) and the controller, a drain pipe (2) having two ends, one end disposed in communication with the cooking chamber (1) and the other end disposed in communication with a condenser (3) located outside of the cooking chamber (1), wherein the condenser (3) has a water level (18) therein, wherein the water level (18) forms a water barrier (21), a waste water pipe (5), a vent pipe (4) leading from the condenser (3) to the outside environment and a temperature sensor (14) in communication with the controller for detecting a temperature, the process for controlling the humidity and steam in during a cooking cycle **characterized by**:
disposing the end of the drain pipe (2) in communication with the condenser (3) below the water level (18) so that heated and humid air in the cooking chamber (1) only exits the cooking chamber (1) during the cooking cycle by passing through the water barrier (21);
disposing the temperature sensor (14) in the condenser (3) in an air space (24) above the water level (18) and proximal the drain pipe (2);
starting a cooking cycle in a steam mode for cooking a food product in the cooking chamber (1);
starting the steam generator (19) to provide steam to the cooking chamber (1);
allowing excess steam to exit the cooking chamber (1) only via the drain pipe (2) and through the water barrier (21) when the cooking chamber (1) is filled with steam such that there is an overpressure in the cooking chamber (1);
measuring the temperature of the air space (24) by the temperature sensor (14), wherein the temperature sensor (14) detects predetermined upper and lower temperatures of the air space (24), wherein the upper temperature indicates a higher pressure in the cooking chamber (1) and wherein the lower temperature indicates a lower pressure in the cooking chamber (1),
activating the steam generator (19) by the temperature sensor (14) via the controller when the temperature sensor (14) detects the predetermined lower temperature in the air space (24) to produce and provide steam to the cooking chamber (1), and
deactivating the steam generator (19) by the temperature sensor (14) via the controller when the temperature sensor (14) detects the predetermined upper temperature in the air space (24) to cease producing and providing steam to the cooking chamber (1), wherein heated and/or humid air in the cooking chamber (1) only exits the cooking chamber (1) by passing through the water barrier (21) at both the higher and lower temperatures until the cooking cycle is complete.

7. A process according to claim 6, further **characterized by**
disposing the temperature sensor (14) in the air space (24) above the water level (18) from about 10 mm to about 80 mm from the drain pipe (2).

8. A process according to any of claims 6 or 7, further **characterized by**
shielding the temperature sensor (14) so that it does not come into contact with the water level (18).

9. A process according to any of claims 6 to 8, further **characterized by**
setting the predetermined upper temperature from about 0.5K to about 20K greater than the predetermined lower temperature.

10. A process according to any of claims 6 to 9, further **characterized by**
setting the predetermined upper temperature from about 1K to about 5K greater than the predetermined lower temperature.

## Patentansprüche

1. Garvorrichtung (100), umfassend:
einen Garraum (1),
einen Kondensator (3), der sich außerhalb des Garraums (1) befindet und einen Wasserspiegel (18) darin aufweist,
ein Ablaufrohr (2), bei dem ein Ende in Kommunikation mit dem Garraum (1) und ein zweites Ende in Kommunikation mit dem Kondensator (3) angeordnet ist, und
ein Feuchtigkeits- und Dampfsteuerungssystem zum Steuern des Feuchtigkeits- und Dampfgehalts im Garraum (1), wobei das Feuchtigkeits- und Dampfsteuerungssystem umfasst:
eine Steuerung,
einen Dampferzeuger (19) in Kommunikation mit dem Garraum (1) und der Steuerung und
einen Temperatursensor (14) in Kommunikation mit der Steuerung,
**dadurch gekennzeichnet, dass**
der Temperatursensor (14) in einem Luftraum (24) oberhalb des Wasserspiegels (18) in dem Kondensator (3) und in der Nähe des Ablaufrohrs (2) zum Messen der Temperatur in dem Luftraum (24) angeordnet ist,
wobei das in Kommunikation mit dem Kondensator (3) angeordnete Ende des Ablaufrohrs (2) unterhalb des Wasserspiegels (18) liegt, so dass eine Wasserbarriere (21) gebildet wird, damit erhitzte und/oder feuchte Luft im Garraum (1) während eines Garzyklus den Garraum (1) nur mittels Passieren durch die Wasserbarriere (21) verlässt,
wobei der Temperatursensor (14) zuvor festgelegte obere und untere Temperaturen in dem Luftraum (24) erfasst, wobei während eines Garzyklus, der Dampf erfordert, die obere Temperatur im Luftraum (24) auf einen höheren Druck im Garraum (1) hinweist und wobei die untere Temperatur im Luftraum (24) auf einen niedrigeren Druck im Garraum (1) hinweist,
wobei, wenn der Temperatursensor die zuvor festgelegte untere Temperatur in dem Luftraum (24) erfasst, der Temperatursensor (14) den Dampferzeuger (19) über die Steuerung aktiviert, so dass Dampf erzeugt und dem Garraum (1) zugeführt wird,
wobei, wenn der Temperatursensor (14) die zuvor festgelegte obere Temperatur in dem Luftraum (24) erfasst, der Temperatursensor (14) den Dampferzeuger (19) über die Steuerung deaktiviert, so dass die Erzeugung von Dampf und die Zuführung von Dampf zum Garraum (1) beendet wird,
und
wobei erhitzte und/oder feuchte Luft im Garraum (1) den Garraum (1) nur mittels Passieren durch die Wasserbarriere (21) verlässt, bis der Garzyklus abgeschlossen ist.

2. Garvorrichtung (100) nach Anspruch 1, wobei das Feuchtigkeits- und Dampfsteuerungssystem **dadurch gekennzeichnet ist, dass** der Temperatursensor (14) in dem Luftraum (24) oberhalb des Wasserspiegels (18) von etwa 10 mm bis etwa 80 mm vom Ablaufrohr entfernt angeordnet ist.

3. Garvorrichtung (100) nach den Ansprüchen 1 und 2, wobei das Feuchtigkeits- und Dampfsteuerungssystem **dadurch gekennzeichnet ist, dass**
der Temperatursensor (14) abgeschirmt ist, so dass er nicht mit dem Wasserspiegel (18) in Kontakt kommt.

4. Garvorrichtung (100) nach einem der Ansprüche 1 bis 3, wobei das Feuchtigkeits- und Dampfsteuerungssystem **dadurch gekennzeichnet ist, dass**
die zuvor festgelegte obere Temperatur von etwa 0,5 K bis etwa 20 K höher ist als die zuvor festgelegte untere Temperatur.

5. Garvorrichtung (100) nach einem der Ansprüche 1-4, wobei das Feuchtigkeits- und Dampfsteuerungssystem **dadurch gekennzeichnet ist, dass**
die zuvor festgelegte obere Temperatur von etwa 1 K bis etwa 5 K höher ist als die zuvor festgelegte untere Temperatur.

6. Verfahren zum Steuern von Feuchtigkeit und Dampf während eines Garzyklus einer Garvorrichtung (100) mit einem Garraum (1), einer Steuerung, einem Dampferzeuger (19) in Kommunikation mit dem Garraum (1) und der Steuerung, einem Ablaufrohr (2) mit zwei Enden, wobei ein Ende in Kommunikation mit dem Garraum (1) angeordnet ist und das andere Ende in Kommunikation mit einem sich außerhalb des Garraums (1) befindenden Kondensator (3) angeordnet ist, wobei der Kondensator (3) einen Wasserspiegel (18) darin aufweist, wobei der Wasserspiegel (18) eine Wasserbarriere (21) bildet, einem Abwasserrohr (5), einem Belüftungsrohr (4), das vom Kondensator (3) zur äußeren Umgebung führt, und einem Temperatursensor (14) in Kommunikation mit der Steuerung zum Erfassen einer Temperatur, wobei das Verfahren zum Steuern von Feuchtigkeit und Dampf während eines Garzyklus **gekennzeichnet ist durch**:
Anordnen des Endes des Ablaufrohrs (2) in Kommunikation mit dem Kondensator (3) unterhalb des Wasserspiegels (18), so dass erhitzte und feuchte Luft im Garraum (1) während des Garzyklus den Garraum (1) nur mittels Passieren **durch** die Wasserbarriere (21) verlässt,
Anordnen des Temperatursensors (14) im Kondensator (3) in einem Luftraum (24) oberhalb des Wasserspiegels (18) und in der Nähe des Ablaufrohrs (2),
Starten eines Garzyklus in einem Dampfmodus zum Garen eines Lebensmittelprodukts im Garraum (1),
Starten des Dampferzeugers (19), um dem Garraum (1) Dampf zuzuführen, Gestatten, dass überschüssiger Dampf den Garraum (1) nur über das Ablaufrohr (2) und **durch** die Wasserbarriere (21) verlässt, wenn der Garraum (1) mit Dampf gefüllt ist, so dass im Garraum (1) ein Überdruck herrscht,
Messen der Temperatur des Luftraums (24) **durch** den Temperatursensor (14), wobei der Temperatursensor (14) zuvor festgelegte obere und untere Temperaturen des Luftraums (24) erfasst, wobei die obere Temperatur auf einen höheren Druck im Garraum (1) hinweist und wobei die untere Temperatur auf einen niedrigeren Druck im Garraum (1) hinweist,
Aktivieren des Dampferzeugers (19) **durch** den Temperatursensor (14) über die Steuerung, wenn der Temperatursensor (14) die zuvor festgelegte untere Temperatur im Luftraum (24) erfasst, so dass Dampf erzeugt und dem Garraum (1) zugeführt wird, und
Deaktivieren des Dampferzeugers (19) **durch** den Temperatursensor (14) über die Steuerung, wenn der Temperatursensor (14) die zuvor festgelegte obere Temperatur im Luftraum (24) erfasst, so dass die Erzeugung von Dampf und die Zuführung von Dampf zum Garraum (1) beendet wird, wobei erhitzte und/oder feuchte Luft im Garraum (1) den Garraum (1) sowohl bei der oberen als auch der unteren Temperatur nur mittels Passieren **durch** die Wasserbarriere (21) verlässt, bis der Garzyklus abgeschlossen ist.

7. Verfahren nach Anspruch 6, **gekennzeichnet durch**
Anordnen des Temperatursensors (14) im Luftraum (24) oberhalb des Wasserspiegels (18) von etwa 10 mm bis etwa 80 mm von dem Ablaufrohr (2) entfernt.

8. Verfahren nach einem der Ansprüche 6 oder 7, **gekennzeichnet durch**
Abschirmen des Temperaturfühlers (14), so dass er nicht mit dem Wasserspiegel (18) in Kontakt kommt.

9. Verfahren nach einem der Ansprüche 6 bis 8, **gekennzeichnet durch**
Einstellen der zuvor festgelegten oberen Temperatur von etwa 0,5 K bis etwa 20 K höher als die zuvor festgelegte untere Temperatur.

10. Verfahren nach einem der Ansprüche 6 bis 9, **gekennzeichnet durch**
Einstellen der zuvor festgelegten oberen Temperatur von etwa 1 K bis etwa 5 K höher als die zuvor festgelegte untere Temperatur.

## Revendications

1. Dispositif de cuisson (100) comprenant :
une chambre de cuisson (1) ;
un condenseur (3) situé à l'extérieur de la chambre de cuisson (1) y logeant un niveau d'eau (18) ;
un tuyau de drainage (2) ayant une extrémité placée en communication avec la chambre de cuisson (1) et une seconde extrémité placée en communication avec le condenseur (3) ; et
un système de régulation de l'humidité et de la vapeur pour réguler la teneur en humidité et en vapeur dans la chambre de cuisson (1), dans lequel le système de régulation de l'humidité et de la vapeur comprend :
un dispositif de commande,
un générateur de vapeur (19) en communication avec la chambre de cuisson (1) et l'unité de commande ; et
un capteur de température (14) en communication avec l'unité de commande ;
**caractérisé en ce que**
le capteur de température (14) est placé dans un espace d'air (24) au-dessus du niveau d'eau (18) dans le condenseur (3) et proximal au tuyau de drainage (2) pour mesurer la température dans ledit espace d'air (24),
dans lequel l'extrémité du tuyau de drainage (2) placée en communication avec le condenseur (3) est sous le niveau d'eau (18) pour former une barrière d'eau (21) de sorte que l'air chauffé et/ou humide dans la chambre de cuisson (1) ne sort de la chambre de cuisson (1) qu'en passant au travers de la barrière d'eau (21) pendant un cycle de cuisson,
dans lequel le capteur de température (14) détecte des températures supérieure et inférieure prédéfinies dans l'espace d'air (24), dans lequel, pendant un cycle de cuisson nécessitant de la vapeur, la température supérieure dans l'espace d'air (24) indique une pression supérieure dans la chambre de cuisson (1) et dans lequel la température inférieure dans l'espace d'air (24) indique une pression inférieure dans la chambre de cuisson (1),
dans lequel, quand le capteur de température (14) détecte la température inférieure prédéfinie dans l'espace d'air (24), le capteur de température (14) active le générateur de vapeur (19) à l'aide de l'unité de commande pour produire et fournir de la vapeur à la chambre de cuisson (1),
dans lequel, quand le capteur de température (14) détecte la température supérieure prédéfinie dans l'espace d'air (24), le capteur de température (14) désactive le générateur de vapeur (19) à l'aide de l'unité de commande pour cesser de produire et de fournir de la vapeur à la chambre de cuisson (1), et
dans lequel l'air chauffé et/ou humide dans la chambre de cuisson (1) ne sort de la chambre de cuisson (1) qu'en passant au travers de la barrière d'eau (21) jusqu'à ce que le cycle de cuisson soit terminé.

2. Dispositif de cuisson (100) selon la revendication 1, dans lequel le système de régulation de l'humidité et de la vapeur est **caractérisé en outre en CE que** le capteur de température (14) est placé dans l'espace d'air (24) au-dessus du niveau d'eau (18) d'environ 10 mm à environ 80 mm du tuyau de drainage.

3. Dispositif de cuisson (100) selon les revendications 1 et 2, dans lequel le système de régulation de l'humidité et de la vapeur est **caractérisé en outre en ce que**
le capteur de température (14) est protégé de sorte qu'il ne vient pas en contact avec le niveau d'eau (18).

4. Dispositif de cuisson (100) selon l'une quelconque des revendications 1 à 3, dans lequel le système de régulation de l'humidité et de la vapeur est **caractérisé en outre en ce que**
la température supérieure prédéfinie est d'environ 0,5 K à environ 20 K supérieure à la température inférieure prédéfinie.

5. Dispositif de cuisson (100) selon l'une quelconque des revendications 1 à 4, dans lequel le système de régulation de l'humidité et de la vapeur est **caractérisé en outre en ce que**
la température supérieure prédéfinie est d'environ 1 K à environ 5 K supérieure à la température inférieure prédéfinie.

6. Procédé de régulation de l'humidité et la vapeur pendant un cycle de cuisson d'un dispositif de cuisson (100) ayant une chambre de cuisson (1), une unité de commande, un générateur de vapeur (19) en communication avec la chambre de cuisson (1) et l'unité de commande, un tuyau de drainage (2) ayant deux extrémités, une extrémité placée en communication avec la chambre de cuisson (1) et l'autre extrémité en communication avec un condenseur (3) situé à l'extérieur de la chambre de cuisson (1), dans lequel le condenseur (3) a un niveau d'eau (18), dans lequel, quand le niveau d'eau (18) forme une barrière d'eau (21), un tuyau d'eaux usées (5), un tuyau d'évent (4) menant du condenseur (3) à l'environnement extérieur et un capteur de température (14) en communication avec l'unité de commande pour détecter une température, le procédé de régulation de l'humidité et de la vapeur pendant le cycle de cuisson **caractérisé en ce qu'**il :
place l'extrémité du tuyau de drainage (2) en communication avec le condenseur (3) sous le niveau d'eau (18) de sorte que l'air chauffé et humide dans la chambre de cuisson (1) ne sort de la chambre de cuisson (1) pendant le cycle de cuisson qu'en passant au travers de la barrière d'eau (21) ;
place le capteur de température (14) dans le condenseur (3) dans un espace d'air (24) au-dessus du niveau d'eau (18) et proximal au tuyau de drainage (2) ;
lance un cycle de cuisson dans un mode vapeur pour cuire un produit alimentaire dans la chambre de cuisson (1) ;
lance le générateur de vapeur (19) pour fournir de la vapeur à la chambre de cuisson (1) ;
permet à l'excès de vapeur de sortir de la chambre de cuisson (1) seulement par le tuyau de drainage (2) et au travers la barrière d'eau (21) quand la chambre de cuisson (1) est remplie de vapeur de sorte qu'il y a une surpression dans la chambre de cuisson (1) ;
mesure la température de l'espace d'air (24) à l'aide du capteur de température (14), dans lequel le capteur de température (14) détecte les températures supérieure et inférieure prédéfinies de l'espace d'air (24), dans lequel la température supérieure indique une pression supérieure dans la chambre de cuisson (1) et dans lequel la température inférieure indique une pression inférieure dans la chambre de cuisson (1),
active le générateur de vapeur (19) par le capteur de température (14) à l'aide de l'unité de commande quand le capteur de température (14) détecte la température inférieure prédéfinie dans l'espace d'air (24) pour produire et fournir de la vapeur à la chambre de cuisson (1), et
désactive le générateur de vapeur (19) par le capteur de température (14) à l'aide de l'unité de commande quand le capteur de température (14) détecte la température supérieure prédéfinie dans l'espace d'air (24) pour cesser de produire et de fournir de la vapeur à la chambre de cuisson (1), dans lequel l'air chauffé et/ou humide dans la chambre de cuisson (1) ne sort de la chambre de cuisson (1) qu'en passant au travers de la barrière d'eau (21) aux températures supérieure et inférieure jusqu'à ce que le cycle de cuisson soit terminé.

7. Procédé selon la revendication 6, **caractérisé en outre en ce qu'**il
place le capteur de température (14) dans l'espace d'air (24) au-dessus du niveau d'eau (18) d'environ 10 mm à environ 80 mm du tuyau de drainage (2).

8. Procédé selon l'une quelconque des revendications 6 ou 7, **caractérisé en outre en ce qu'**il
protège le capteur de température (14) de sorte qu'il ne vient pas en contact avec le niveau d'eau (18).

9. Procédé selon l'une quelconque des revendications 6 à 8, **caractérisé en outre en ce qu'**il
règle la température supérieure prédéfinie d'environ 0,5 K à environ 20 K supérieure à la température inférieure prédéfinie.

10. Procédé selon l'une quelconque des revendications 6 à 9, **caractérisé en outre en ce qu'**il
règle la température supérieure prédéfinie d'environ 1 K à environ 5 K supérieure à la température inférieure prédéfinie.
